## Europäisches Patentamt

## European Patent Office

## Office européen des brevets

(11) Veröffentlichungsnummer: **0 411 380 A1**

# (12) EUROPÄISCHE PATENTANMELDUNG

(21) Anmeldenummer: 90113626.7

(22) Anmeldetag: 16.07.90

(51) Int. Cl.⁵: **B23K 35/362**, //B23K35/368

(30) Priorität: 29.07.89 DE 3925257

(43) Veröffentlichungstag der Anmeldung:
06.02.91 Patentblatt 91/06

(84) Benannte Vertragsstaaten:
CH DE FR GB LI NL SE

(71) Anmelder: Hermann C. Starck Berlin GmbH &
Co. KG KG
Eschenallee 36
D-1000 Berlin 19(DE)

(72) Erfinder: Eschnauer, Heinz, Dr.
Gelnhäuser Strasse 15
D-6463 Freigericht 1(DE)
Erfinder: Meinhardt, Helmut, Dr.
Laubenstrasse 21
D-7887 Laufenburg(DE)
Erfinder: Lugscheider, Erich, Prof. Dr.
Steppenbergallee 201
D-5100 Aachen(DE)
Erfinder: Eichhorn, Friedrich, Prof. Dr.-Ing.
Fichthand 2
D-5100 Aachen(DE)
Erfinder: Bach, Friedrich-Wilhelm, Dr.-Ing.
Krendelstrasse 53
D-3004 Isernhagen(DE)

(74) Vertreter: Steiling, Lothar, Dr. et al
c/o Bayer AG Konzernverwaltung RP Patente
Konzern
D-5090 Leverkusen 1 Bayerwerk(DE)

(54) **Multi-Komponenten-Verbund-Schweisspulver sowie Vefahren zu seiner Herstellung.**

(57) Die vorliegende Erfindung betrifft ein neues Multi-Komponenten-Verbund-Schweißpulver (MKVSP), bestehend aus Einzelteilchen der Komponenten, die zu Agglomeraten zusammengefügt sind, wobei die Einzelteilchen der Agglomerate einerseits aus Schweißwerkstoffen wie Metallen, Refraktärmetallen, Legierungen, Ferrolegierungen, Metalloiden, Hartstoffbildnern, metallischen Hartstoffen, nichtmetallischen Hartstoffen, Hartmetallen und mineralischen Schweißwerkstoffen in Pulverform bestehen und andererseits aus schlackenbildenden, gasbildenden, schutzgasbildenden, synergistisch wirkenden Zusatzstoffen und/oder Flußmitteln in Pulverform sowie Verfahren zu seiner Herstellung.

# MULTI-KOMPONENTEN-VERBUND-SCHWEISSPULVER SOWIE VERFAHREN ZU SEINER HERSTELLUNG

Die vorliegende Erfindung betrifft ein neues Multi-Komponenten-Verbund-Schweißpulver (MKVSP), bestehend aus Einzelteilchen der Komponenten, die zu Agglomeraten zusammengefügt sind, wobei die Einzelteilchen der Agglomerate einerseits aus Schweißwerkstoffen wie Metallen, Refraktärmetallen, Legierungen, Ferrolegierungen, Metalloiden, Hartstoffbildnern, metallischen Hartstoffen, nichtmetallischen Hartstoffen, Hartmetallen und mineralischen Schweißwerkstoffen in Pulverform bestehen und andererseits aus schlackenbildenden, gasbildenden, schutzgasbildenden, synergistisch wirkenden Zusatzstoffen und/oder Flußmitteln in Pulverform sowie Verfahren zu seiner Herstellung.

Schweißelektroden in Form von nahtlosen oder gefalzten dünnen Röhrchen oder Hohlbändern enthalten üblicherweise Schweißpulver und Schweißzusätze der unterschiedlichsten Art. Die Zusammensetzung der Schweißpulver im Kern der Elektroden ist je nach Schweißgut und Schweißverfahren mineralischer oder metallischer Natur. Gelegentlich sind Hartstoff-Pulver als Verschleißschutz-Komponenten zusätzliche Bestandteile der Schweißelektroden-Füllung.

Eine Vielzahl verschiedener Einzelkomponenten der üblichen Schweißpulver sind von stofflich unterschiedlicher Natur. Sie unterscheiden sich in ihrer Dichte, Oberflächenstruktur, Teilchenform, Korngröße und Kornverteilung meistens erheblich voneinander, so daß bereits beim Zusammenmischen der Multi-Komponenten-Schweißpulver unvermeidliche Inhomogenitäten der Mischungen auftreten. Das Entmischen der Pulver-Komponenten verstärkt sich noch beim Hantieren mit den Pulvermischungen, beim Füllen der Schweißelektroden und während des Transports derselben, besonders aber während des Schweißvorganges. Schwankungen in der Schweißpulverzusammensetzung verursachen Störungen des Schweißverlaufs und hinterlassen fehlerhaftes Schweißgut, was besonders beim Einsatz der Elektroden an Roboter-Schweißgeräten unvermeidlich auftritt.

Für automatisch ablaufende Schweißverfahren sind also die Anforderungen an die Beschaffenheit von Fülldraht-und Füllband-Schweißelektroden außerordentlich hoch.

Eine weitgehend gleichmäßige Verteilung der unterschiedlichsten Bestandteile einer Multi-Komponenten-Schweißpulvermischung kann durch das Agglomerieren einer solchen Pulvermischung mit Hilfe geeigneter Bindemittel oder durch leichtes Versintern der Pulverpartikel in einem Glühprozeß erreicht werden.

Entsprechende Verfahren gehen aus der DE-A 2 010 546 und der US-A 4 683 011 hervor.

Nachteilig an den aus dem Stand der Technik bekannten Multi-Komponenten-Verbund-Schweißkörpern ist deren Inhomogenität und die Tatsache, daß darüber hinaus das Bereitstellen von Pulvern mit definierter Zusammensetzung nicht immer möglich war.

Aufgabe dieser Erfindung ist es, verbesserte Multi-Komponenten-Verbundschweißpulver beliebiger Zusammensetzung durch Kombination von Metallen, Refraktärmetallen, Legierungen, Ferrolegierungen, Metalloiden, Hartstoffbildner, metallischen Hartstoffen, nichtmetallischen Hartstoffen, Hartmetallen und mineralischen Produkten sowie von Zusatzstoffen mit schlackenbildenden, gasbildenden, schutzgasbildenden, synergistischen und Flußmittel-Eigenschaften und mit Legierungs-, Zubrand- oder Oberflächen-beeinflussenden Eigenschaften bereitzustellen.

Es wurden nunmehr Pulver gefunden, die diese Voraussetzungen in hervorragender Weise erfüllen. Diese sind Gegenstand dieser Erfindung. Es handelt sich dabei um Multi-Komponenten-Verbund-Schweißpulver, bestehend aus Einzelteilchen der Komponenten, die zu Agglomeraten zusammengefügt sind, wobei die Einzelteilchen der Agglomerate einerseits aus Schweißwerkstoffen wie Metallen, Refraktärmetallen, Legierungen, Ferrolegierungen, Metalloiden, Hartstoffbildnern, metallischen Hartstoffen, nichtmetallischen Hartstoffen, Hartmetallen und mineralischen Schweißwerkstoffen in Pulverform bestehen und andererseits aus schlackenbildenden, gasbildenden, schutzgasbildenden, synergistisch wirkenden Zusatzstoffen und/oder Flußmitteln in Pulverform, welche dadurch gekennzeichnet sind, daß die Einzelteilchen in agglomerierten Multi-Komponenten-Verbund-Schweißpulvern homogen verteilt vorliegen und die Agglomerate eine kugelförmige Gestalt mit Partikelgrößen von mindestens 10 μm bis höchstens 300 μm aufweisen.

Besonders gute Eigenschaften weisen Schweißpulver auf, in denen der Schweißwerkstoff neben Metallpulvern und/oder Legierungen die Komponenten WC, $W_2C$, TiC, $TiB_2$, TiN, (W,Ti)C und andere Carbide, Nitride, Boride einzeln oder in Mischungen ntereinander und als Flußmittel $B_2O_3$, Borax, Bor, Borverbindungen, Seltenerd-Oxide oder sonst übliche Flußmittel und/oder mineralische Bestandteile enthält.

Die erfindungsgemäßen Schweißpulver sind im Sprühtrocken-Verfahren auf besonders einfache und kostensparende Weise erhältlich. Es ist dabei möglich, auch ausgefallene und sonst nicht realisierbare Variationen und Zusammensetzungen in seltener Konstanz an Ratio, Homogenität, Dichte, Festigkeit, Fließfähigkeit und Förderbarkeit zu erhalten, unabhängig von Teilchendichte, -form, -oberfläche, -größe, -verteilung, -anteil u.a. der Einzelkomponenten.

Besonders bevorzugt sind somit Multi-Komponenen-Verbund-Schweißpulver, die durch Sprühtrocknen einer die Komponenten der Multi-Komponenten-Verbund-Schweißpulver enthaltenden Suspension oder eines entsprechenden Schlickers erhältlich sind.

Die erfindungsgemäßen Schweißpulver sind gut geeignet zum Unterpulverschweißen, Verbindungsschweißen, Auftragsschweißen, Elektro-Schlacke-Schweißen, Elektro-Gas-Schweißen sowie Kombination des Unterpulverschweißens mit den anschließend genannten Schweiß-Verfahren.

Beim Unterpulverschweißen schützt die Schlakke die Schweißstelle vor den Einflüssen der Atmosphäre. Außerdem können Zubrände aus Multi-Komponenten-Verbund-Schweißpulver zur Schweißgutverbesserung, besonders von Spezialstählen und höher legierten Stählen beitragen. Fülldraht-Verbindungs-Schweißen erstreckt sich von tieftemperatur- bis warmfesten Stählen, von Baustählen bis zu Feinkornbaustählen.

Mit Multi-Komponenten-Verbund-Schweißpulver können bei modernen Feinkornbaustählen immer größere Festigkeiten erreicht werden.

Fülldraht-Auftragsschweißen erstreckt sich vom Auftrag mit guter mechanischer Bearbeitung bis zu nicht mehr durch Schleifen bearbeitbaren Härten.

Mit Multi-Komponenten-Verbund-Schweißpulvern können hochkorrosions- und verschleißfeste, hochtemperaturbeanspruchte zäh-harte Auftragsschweißschichten erhalten werden.

Elektro-Schlacke-Schweißen ist ein vollautomatisches Widerstandsschmelzverfahren sehr hoher Leistungsfähigkeit für senkrechte Schweißpositionen, wirtschaftlich für Schwermaschinen, Großapparate, Behälter und Schiffbau.

Mit Multi-Komponenten-Verbund-Schweißpulvern können die Schweißguteigenschaften verbessert werden, hinsichtlich feinerer Gefügestruktur und höherer Zähigkeit von Spezialstählen.

Elektro-Gas-Schweißen ist ein vollmechanisches Metall-Schutzgas-Schweißverfahren hoher Leistungsfähigkeit für senkrechte Schweißpositionen im Schiff-, Apparate- und Behälterbau. Multi-Komponenten-Verbund-Schweißpulver können auch hier die Schweißguteigenschaften verbessern, was bei diesen vollautomatischen Verfahren zunehmend wichtiger wird.

Die besonderen Eigenschaften des erfindungsgemäßen Schweißpulvers bestehen darin, daß eine Anzahl von pulverförmigen Bestandteilen in möglichst homogener Verteilung der Einzelpartikel in Form von agglomerierten Verbundpulverteilchen vorliegt. Dadurch bleibt die homogene Konsistenz des Pulvers beim Verarbeiten zu Fülldrähten oder Füllbändern oder durch beim Transport oder sonstiger Handhabung erhalten.

Gegenstand der Erfindung ist auch ein Verfahren zur Herstellung der erfindungsgemäßen Schweißpulver. Es ist dadurch gekennzeichnet, daß eine die Komponenten der Multi-Komponenten-Verbund-Schweißpulver sowie ein organisches Bindemittel enthaltende Suspension oder ein entsprechender Schlicker sprühgetrocknet wird.

Die Herstellung der Multi-Komponenten-Verbund-Schweißpulver-Agglomerate erfolgt durch an sich bekannte Verfahren der Sprühtrocknung, wobei die Aufschlämmung der pulverförmigen Bestandteile der Verbundschweißpulver in wäßrigen oder auch nicht-wäßrigen Flüssigkeiten, nötigenfalls unter Zusatz eines Bindemittels organischer oder anorganischer Natur, als Suspension, als Schlicker oder als pastöse Masse in die Heizzone eines Sprühtrocken-Aggregates hineingesprüh wird und als trockenes Pulver-Agglomerat aus dem Bodenablaß des Trockners abgezogenn wird. Nötigenfalls kann eine thermische Nachbehandlung (Sinterung) der Agglomerate mit dem Ziel einer zusätzlichen Verfestigung nachgeschaltet werden.

Die durch Sprühtrocknen erzeugten Pulver können darüber hinaus ganz oder teilweise bestehen aus den Komponenten:
- Eisen, Kobalt, Nickel, Chrom, Mangan und/oder deren Legierungen untereinander sowie mit Refraktärmetallen,
- $WC$, $W_2C$, $TiC$, $TiB_2$, $TiN$, $(W,Ti)C$ und anderen Carbiden, Nitriden, Boriden in Mischungen mit
- $B_2O_3$, Borax, B, Borverbindungen, Seltenerd-Oxiden oder sonst üblichen Flußmitteln.

Die Multi-Komponenten-Verbund-Schweißpulver sind aus verschiedenen Gründen zur Füllung von Hohldrähten und -bändern besonders geeignet. Sie zeichnen sich unter anderem aus durch folgende Vorteile:
- kugelige Form der agglomerierten Pulver,
- Verwendungsmöglichkeit von Abfällen wie Staub und Feinstpulver, die allein durch das Agglomerieren nutzbar gemacht werden,
- Homogenität der Pulver-Füllung,
- keine Entmischung beim Füllvorgang,
- hoher Füllgrad aufgrund hoher Schüttdichte,
- große Konstanz des Schweißgutes,
- hohe Schweißleistung,
- gute und feste Verbindung zwischen mineralischen, metallischen und anderen Komponenten.

In einer bevorzugten Ausführungsform des erfindungsgemäßen Verfahrens werden dabei die Suspension oder der Schlicker bei einer Temperatur zwischen 150°C und 300°C im Sprühtrockner entwässert und getrocknet.

Besonders gute Ergebnisse werden dadurch erzielt, daß die Komponenten der Multi-Komponenten-Verbund-Schweißpulver in der Suspension oder dem Schlicker in Anteilen von 80 bis 98 % Metallpulver und 2 bis 20 % Mineralpulver eingesetzt werden.

Ebenso ist es vorteilhaft möglich, die Komponenten der Multi-Komponenten-Verbund-Schweißpulver in der wäßrigen Suspension oder dem Schlicker in Mengen von 60 bis 80 % Feststoff und 20 bis 40 % Wasser und/oder anderen flüssigen Medien einzusetzen.

Im folgenden werden drei Beispiele für erfindungsgemäße Schweißpulverzusammensetzungen aus metallischen und mineralischen Anteilen angegeben, die auf anderem Wege nicht mit vergleichbar guten Eigenschaften herstellbar waren. Durch diese Beispiele soll keine Einschränkung zu sehen sein. Bei den %-Angaben handelt es sich um Gew.-%.

Beispiel 1
‾

Ein erfindungsgemäßes Multi-Komponenten-Verbund-Schweißpulver wurde in der Weise hergestellt, daß 95 kg der Komponentenmischung A (Metallpulveranteil) in Form eines Pulvers, bestehend aus 20 % Cr, 15 % Ni, 4 % Mo, 0,6 % C, Rest Eisenpulver, und 5 kg der Komponentenmischung B (mineralischer Anteil) in Form eines Pulvers aus 25 % MnO, 40 % SiO₂, 15 % Al₂O₃, 5 % CaF₂, 5 % MgO und 10 % CaO mit 2 kg ®MOWIOL Polyvinylalkohol 20-98 (Polymerisationsgrad 1600) - Handelsprodukt der HOECHST AG - als organisches Bindemittel in ca. 30 l Wasser aufgeschlemmt wurden und die Suspension in einen Sprühtrockner des Typs NIRO-Compact-Atomizer (Heizkammervolumen 1 m³ mit einem Pumpendruck von 3 bar (gemessen vor der Einspritzdüse) und einem Durchsatz von ca. 120 kg/h eingesprüht wurde. Die Trockenkammertemperatur betrug 220 bis 250° C.

Weitere Versuchsmuster wurden gemäß dem Beispiel 1 mit geänderten Ausgangsmischungen wiederholt, wobei die Zusammensetzungen der metallischen Komponenten und der mineralischen Komponenten variiert wurden.

Beispiel 2
‾

Metallpulveranteil:
87 % eines Pulvers aus 3 % Mn, 10 % Ni, 1 % Mo, 0,3 % C, 0,5 % Si, Rest Fe
Mineralischer Anteil:
3 % Borax (oder B₂O₃ oder eine andere Borverbindung) und 10 % eines Pulvers der im Beispiel 1 genannten mineralischen Komponenten

Beispiel 3

Metallpulveranteil:
90 % eines Pulvers aus 2 % Mn, 6 % Cr, 10 % Ni, 0,5 % Mo, Rest Fe
Mineralischer Anteil:
10 % eines Pulvers der im Beispiel 1 genannten mineralischen Komponenten

Die Produkte zeigten in allen Fällen ein ausgezeichnetes Fließverhalten, die Agglomerate waren von einheitlicher Konsistenz. Die Siebanalyse ergab einen Körnungsbereich < 250 μm.

Die Möglichkeit der Variation in der Zusammensetzung der Multi-Komponenten-Verbund-Schweißpulver sollen durch die genannten Beispiele selbstverständlich nicht eingeschränkt werden, es handelt sich in diesen Angaben um bevorzugte Ausführungsformen. Allgemein bevorzugt sind Zusammensetzungen der MKVSP der folgenden Art:

Variante 1
‾

Metallpulveranteil:
95 - 97 % eines Pulvers aus 20 % Cr, 15 % Ni, 4 % Mo, 0,6 % C, 0,5 % Si, Rest Fe
Mineralischer Anteil:
3 - 5 % eines Pulvers aus 20 - 40 % MnO, 30 - 40 % SiO₂, 1 - 10 % Al₂O₃, 1 - 10 % CaF₂, 1 - 5 % MgO, 1 -10 % CaO

Variante 2
‾

Metallpulveranteil:
87 - 93 % eines Pulvers aus 1 - 3 % Mn, 1 - 10 % Ni, 0,1 - 3 % Mo, 0,3 % C, 0,5 % Si, Rest Fe
Mineralischer Anteil:
2 - 3 % Borax und/oder B₂O₃ und/oder einer anderen Borverbindung und 5 - 10 % eines Pulvers der im Beispiel 1 genannten mineralischen Komponente

Variante 3
‾

Metallpulveranteil:
90 - 95 % eines Pulvers aus 2 % Mn, 6 % Cr, 10 % Ni, 0,5 % Mo, Rest Fe
Mineralischer Anteil:
5 - 10 % der im Beispiel 1 genannten mineralischen Komponente

Ansprüche

1. Multi-Komponenten-Verbund-Schweißpulver, bestehend aus Einzelteilchen der Komponenten, die zu Agglomeraten zusammengefügt sind, wobei die Einzelteilchen der Agglomerate einerseits aus Schweißwerkstoffen wie Metallen, Refraktärmetallen, Legierungen, Ferrolegierungen, Metalloiden, Hartstoffbildnern, metallischen Hartstoffen, nichtmetallischen Hartstoffen, Hartmetallen und mineralischen Schweißwerkstoffen in Pulverform bestehen und andererseits aus schlackenbildenden, gasbildenden, schutzgasbildenden, synergistisch wirkenden Zusatzstoffen und/oder Flußmitteln in Pulverform, welche dadurch gekennzeichnet sind, daß die Einzelteilchen in agglomerierten Multi-Komponenten-Verbund-Schweißpulvern homogen verteilt vorliegen und die Agglomerate eine kugelförmige Gestalt mit Partikelgrößen von mindestens 10 $\mu$m bis höchstens 300 $\mu$m aufweisen.

2. Multi-Komponenten-Verbund-Schweißpulver gemäß Anspruch 1, dadurch gekennzeichnet, daß der Schweißwerkstoff neben Metallpulvern und/oder Legierungen die Komponenten WC, $W_2C$, TiC, $TiB_2$, TiN, (W,Ti)C und andere Carbide, Nitride, Boride einzeln oder in Mischungen ntereinander und als Flußmittel $B_2O_3$, Borax, Bor, Borverbindungen, Seltenerd-Oxide oder sonst übliche Flußmittel und/oder mineralische Bestandteile enthält.

3. Multi-Komponenten-Verbund-Schweißpulver gemäß einem der Ansprüche 1 oder 2, erhältlich durch Sprühtrocknen einer die Komponenten der Multi-Komponenten-Verbundschweißpulver enthaltenden Suspension oder eines entsprechenden Schlickers

4. Verfahren zur Herstellung des Multi-Komponenten-Verbund-Schweißpulvers gemäß einem oder mehrerer der Ansprüche 1 bis 3, dadurch gekennzeichnet, daß eine die Komponenten der Multi-Komponenten-Verbund-Schweißpulver sowie ein organisches Bindemittel enthaltende Suspension oder ein entsprechender Schlicker sprühgetrocknet wird.

5. Verfahren gemäß Anspruch 4, dadurch gekennzeichnet, daß die Suspension oder der Schlicker bei einer Temperatur zwischen 150°C und 300°C im Sprühtrockner entwässert und getrocknet werden.

6. Verfahren gemäß einem der Ansprüche 4 oder 5, dadurch gekennzeichnet, daß die Komponenten der Multi-Komponenten-Verbund-Schweißpulver in der Suspension oder dem Schlicker in Anteilen von 80 bis 98 % Metallpulver und 2 bis 20 % Mineralpulver eingesetzt werden.

7. Verfahren gemäß einem der Ansprüche 4 oder 5, dadurch gekennzeichnet, daß die Komponenten der Multi-Komponenten-Verbund-Schweißpulver in der wäßrigen Suspension oder dem Schlicker in Mengen von 60 bis 80 % Feststoff und 20 bis 40 % Wasser und/oder anderen flüssigen Medien eingesetzt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WPIL/DERWENT, Accession Nr. 88-245706; & JP-A-63 177 977 (KUBOTA) 22-07-1988 * Das ganze Dokument * — — — | 1-4 | B 23 K 35/362 // B 23 K 35/368 |
| Y | SCHWEIBEN UND SCHNEIDEN, Band 30, nr. 11, November 1978, Seiten 435-439; U. DILTHEY et al.: "Schweisspulver für das Unterpulverschweissen - Herstellung und Eigenschaften" * Seiten 437-439 * — — — | 1,4 | |
| Y | US-A-4 735 652 (W.A. JOHNSON et al.) * Patentansprüche; Spalte 3; Beispiel * — — — | 1,4 | |
| A | DE-B-1 508 328 (HOLDING INTERCITO) — — — | | |
| A,D | DE-A-2 010 546 (LINDE) — — — | | |
| A,D | US-A-4 683 011 (R.J. WEAVER et al.) — — — — — | | |

| RECHERCHIERTE SACHGEBIETE (Int. Cl.5) |
|---|
| B 23 K B 22 F |

Der vorliegende Recherchenbericht wurde für alle Patentansprüche erstellt

| Recherchenort | Abschlußdatum der Recherche | Prüfer |
|---|---|---|
| Den Haag | 07 November 90 | MOLLET G.H.J. |